# FASCICULE DE BREVET EUROPEEN

(11) **EP 4 553 561 B1**
(45) Date de publication et mention de la délivrance du brevet: **28.10.2026**
(21) Numéro de dépôt: 24210488.3
(22) Date de dépôt: 04.11.2024
(51) Int. Cl.: G02B 26/08, G01S 7/497

(54) **DISPOSITIF RÉFLECTEUR COMPRENANT UN DÉTECTEUR, ET PROCÉDÉ ASSOCIÉ**
REFLEKTORVORRICHTUNG MIT EINEM DETEKTOR UND VERFAHREN DAFÜR
REFLECTOR DEVICE INCLUDING A DETECTOR, AND ASSOCIATED METHOD

(30) Priorité: 09.11.2023 FR 2312227
(43) Date de publication de la demande: 14.05.2025
(73) Titulaire: Commissariat à l'Energie Atomique et aux Energies Alternatives, 75015 Paris (FR)
(72) Inventeur: MOLLARD, Laurent, 38054 GRENOBLE Cedex 09 (FR); FREY, Laurent, 38054 GRENOBLE Cedex 09 (FR)
(74) Mandataire: Hautier IP

(56) Documents cités:
- EP-A1- 2 490 063
- DE-A1- 10 357 062
- US-A1- 2020 278 428

## Description

### DOMAINE TECHNIQUE

La présente invention concerne le domaine des dispositifs réflecteurs destinés à réfléchir un faisceau lumineux incident vers une cible. Elle trouve pour application particulièrement avantageuse le domaine des micromiroirs MEMS (microsystèmes électromécaniques), notamment pour des applications de LIDAR (de l'anglais *light detection and ranging* », que l'on peut traduire en français « détection et estimation de la distance par la lumière) et de pointage laser, par exemple pour une focalisation de faisceau en un point donné d'une scène.

### ETAT DE LA TECHNIQUE

Les dispositifs réflecteurs sont utilisés dans de nombreuses applications dans lesquelles on cherche à réfléchir un faisceau lumineux incident vers une cible donnée.

Pour cela, un faisceau lumineux incident est émis par une source vers le dispositif réflecteur présentant un miroir au moins partiellement transparent. Le miroir présente une face avant disposée de façon à recevoir le faisceau lumineux incident. Le miroir est orienté avec la source de façon à former un faisceau réfléchi en direction de la cible.

Par exemple, des micromiroirs MEMS sont couramment utilisés pour des applications de LIDAR ou de pointage laser. Les micromiroirs peuvent pour cela comprendre un module actionneur configuré pour faire pivoter le micromiroir autour d'au moins un axe de rotation.

Dans les dispositifs de type LIDAR, les micromiroirs permettent de balayer une surface ou une cible avec un rayonnement lumineux à des fins de détection ou d'imagerie. Typiquement, les micromiroirs sont configurés pour osciller selon un ou deux axe(s) de rotation, à une fréquence de balayage prédéterminée, de manière à réfléchir un rayonnement incident selon différentes directions.

La fréquence de balayage des micromiroirs peut varier de quelques Hz à plusieurs kHz, et leur taille peut être de l'ordre de quelques dizaines de micromètres à plusieurs millimètres (par exemple quelques millimètres de diamètre pour des micromiroirs en forme de disque), et peut notamment être comprise entre 500 µm et 10 mm.

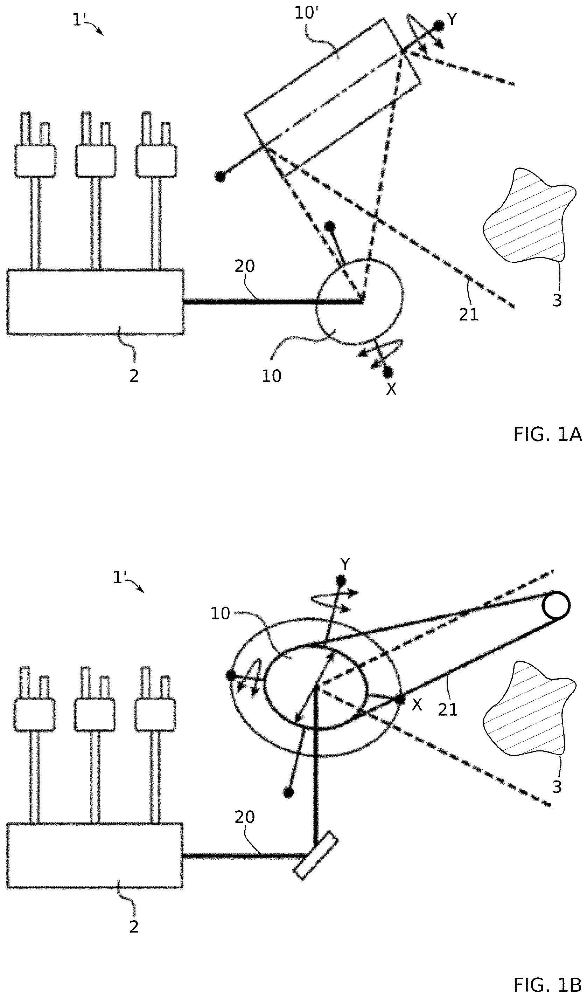

Les figures 1A et 1B illustrent à titre d'exemple deux architectures de dispositif réflecteur 1'. En figure 1A, le dispositif 1' peut comprendre un premier micromiroir 10 et deuxième micromiroir 10', agencés pour pivoter respectivement autour d'un premier axe de rotation X et d'un deuxième axe de rotation Y non parallèles entre eux. En particulier, ces deux micromiroirs 10, 10' sont agencés de sorte qu'un faisceau lumineux 20 émis par une source lumineuse 2 soit réfléchi par le premier micromiroir 10 en direction du deuxième micromiroir 10' qui le réfléchit à son tour en direction, par exemple, d'un écran ou d'une cible 3. La rotation de chacun des micromiroirs 10, 10' autour de leur axe de rotation respectif permet ainsi d'effectuer un balayage d'une surface avec le faisceau lumineux réfléchi 21, par exemple, à des fins d'imagerie ou de détection.

En figure 1B, le dispositif 1' peut comprendre un unique micromiroir 10 monté pivotant autour de deux axes de rotation X et Y non parallèles entre eux. La rotation de ce micromiroir 10 autour de l'un et l'autre des deux axes X, Y permet ainsi de balayer la surface d'un écran ou d'une cible 3 au moyen d'un faisceau lumineux réfléchi 21 issu d'une source lumineuse 2 et réfléchi par ce micromiroir 10.

Dans ces dispositifs, il est important de s'assurer d'un bon alignement entre la source du faisceau et le micromiroir afin de bien orienter le faisceau réfléchi. En outre, ces dispositifs sont souvent exposés à des contraintes thermiques et mécaniques pouvant impacter leur fonctionnement, et notamment les propriétés du faisceau réfléchi.

Il est notamment connu du document EP3726268A1 un dispositif réflecteur comprenant un miroir partiellement transparent et des moyens d'absorption d'un faisceau transmis par la face arrière du miroir pour limiter l'échauffement thermique. Cette solution reste toutefois limitée pour s'assurer du bon fonctionnement du dispositif réflecteur. Le document US2020278428 divulgue un dispositif réflecteur également connu de la technique antérieure.

Un objet de la présente invention est donc de proposer une solution améliorant la fiabilité de la réflexion par un dispositif réflecteur partiellement réfléchissant.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un premier aspect on prévoit un dispositif réflecteur plus particulièrement destiné à réfléchir un faisceau lumineux incident vers une cible. Le dispositif réflecteur comprend un miroir partiellement transparent présentant une face avant disposée de façon à recevoir le faisceau lumineux incident et une face arrière opposée à la face avant, le miroir étant configuré pour former un faisceau réfléchi par réflexion d'une partie du faisceau incident, et pour transmettre une autre partie du faisceau incident par la face arrière pour former un faisceau transmis.

Avantageusement, le dispositif réflecteur comprend en outre un module détecteur disposé en regard de la face arrière du miroir. Le module détecteur est configuré pour mesurer au moins un paramètre associé au faisceau transmis, l'au moins un paramètre étant choisi parmi :
- une présence ou une absence du faisceau transmis,
- une position du faisceau transmis,
- une forme du faisceau transmis,
et pour déterminer un état d'alignement du faisceau incident avec le dispositif réflecteur et/ou une déformation du miroir.

Ainsi, le faisceau transmis par le miroir partiellement transparent peut être utilisé pour s'assurer du bon alignement du faisceau incident avec le miroir, et notamment du bon alignement entre la source et le miroir, et/ou détecter une éventuelle déformation du miroir, tout en permettant la réflexion du faisceau réfléchi vers la cible.

Si, suite à un choc par exemple, le miroir et/ou la source sont déplacés, le faisceau incident peut ne plus être réfléchi par le miroir ou bien sa position peut être changée. Le dispositif réflecteur permet de détecter cela et éventuellement d'envisager des actions correctrices. Lorsque le dispositif réflecteur est exposé à des contraintes thermiques, le dispositif réflecteur permet de déterminer une déformation du miroir entrainant notamment un changement de focalisation du faisceau transmis.

Le dispositif réflecteur permet donc une mesure en temps réel de l'alignement du laser et du miroir et/ou de la déformation du miroir, qui entrainent une modification du faisceau réfléchi. Il est donc possible de s'assurer en continu que le faisceau réfléchi va bien dans la direction souhaitée. La fiabilité de la réflexion du faisceau incident vers une cible est donc améliorée. Le dispositif réflecteur est donc particulièrement avantageux pour les applications dans lesquelles il n'y a pas de retour de la cible, c'est-à-dire qu'il est difficile ou impossible de s'assurer que le faisceau réfléchi atteint correctement la cible.

Un deuxième aspect concerne un procédé de mesure de l'alignement d'un faisceau incident et/ou d'une déformation de miroir mettant en œuvre le dispositif réflecteur selon le premier aspect, comprenant :
- une émission du faisceau incident depuis une source lumineuse vers le dispositif réflecteur,
- une mesure, par le module détecteur, de l'au moins un paramètre associé au faisceau transmis par le miroir, l'au moins un paramètre étant choisi parmi :
   - une présence ou une absence du faisceau transmis,
   - une position du faisceau transmis,
   - une forme du faisceau transmis,
- une détermination de l'état d'alignement du faisceau incident avec le dispositif réflecteur et/ou de la déformation du miroir comprenant :
   - si le paramètre mesuré par le module détecteur est une absence du faisceau transmis et/ou une position du faisceau transmis différente d'une position définie, une détermination d'un mauvais alignement du faisceau incident, et/ou
   - si le paramètre mesuré par le module détecteur est une forme du faisceau transmis différente d'une forme définie, une détermination d'une déformation du miroir.

On comprend donc que le procédé de mesure permet également une mesure en temps réel de l'alignement de la source et du miroir et/ou de la déformation du miroir. Le procédé permet donc une fiabilisation de la réflexion du faisceau incident.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
Les figures 1A et 1B représentent deux exemples de dispositifs réflecteurs de l'état de la technique.
Les figures 2A à 2C représentent des vues en coupe de trois exemples de dispositif réflecteurs selon trois exemples de réalisation de l'invention.
La figure 3 représente une vue en coupe du dispositif réflecteur lors d'une détermination d'un désalignement entre la source et le miroir, selon un exemple de réalisation.
Les figures 4A et 4B représentent une vue en coupe du dispositif réflecteur lors d'une détermination d'une déformation du miroir, selon un exemple de réalisation.
La figure 5A représente une vue en perspective d'un exemple de dispositif réflecteur dans lequel le miroir est monté pivotant selon un axe de rotation.
La figure 5B représente une vue du dessus d'un exemple de dispositif réflecteur dans lequel le miroir est monté pivotant selon deux axes de rotation.
La figure 6 représente une vue en coupe d'un dispositif réflecteur comprenant une lentille de focalisation, selon un exemple de réalisation.
Les figures 7A et 7B représentent une vue en coupe de deux exemples particuliers de dispositif réflecteur.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions relatives des couches et éléments du dispositif réflecteur ne sont pas représentatives de la réalité.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement.

Selon un exemple, le module détecteur est configuré pour déterminer l'état d'alignement du faisceau incident avec le dispositif réflecteur et/ou d'une déformation du miroir selon :
- si le paramètre mesuré par le module détecteur est une absence du faisceau transmis et/ou une position du faisceau transmis différente d'une position définie, un mauvais alignement du faisceau incident est déterminé par le module détecteur, et/ou
- si le paramètre mesuré par le module détecteur est une forme du faisceau transmis différente d'une forme définie, une déformation du miroir est déterminée par le module détecteur.

Ainsi, le dispositif réflecteur peut permettre de déterminer indépendamment un mauvais alignement du faisceau incident et/ou une déformation du miroir, selon la nature de l'information mesurée.

Selon un exemple, le dispositif réflecteur comprend en outre un support et un module actionneur configuré pour pivoter le miroir autour d'au moins un axe de rotation par rapport au support, dans lequel le module détecteur est solidaire du support. Le dispositif réflecteur est ainsi particulièrement adapté aux applications de miroir MEMS. Le module détecteur étant solidaire du support, la détermination d'un mauvais alignement du faisceau incident et/ou d'une déformation du miroir peut être faite indépendamment de la position angulaire du miroir. En effet, le faisceau transmis ne sera pas impacté par la position angulaire du miroir lors de sa rotation.

Selon un exemple, le module détecteur présente une résolution temporelle supérieure ou égale à un temps caractéristique de désalignement du faisceau incident. Pour cela, par exemple, le module détecteur présente une fréquence d'acquisition supérieure ou égale à une fréquence de vibration de la source.

Selon un exemple, le miroir comprend :
- une couche réflectrice métallique comprenant au moins une ouverture et/ou présentant une épaisseur choisie pour transmettre l'autre partie du faisceau incident pour former le faisceau transmis, et/ou
- un empilement de Bragg comprenant au moins un empilement de Bragg dit « élémentaire » comprenant deux couches présentant des indices de réfraction distincts.

L'empilement de Bragg permet de moduler la part transmise et la part réfléchie du faisceau selon les caractéristiques des couches le composant et du nombre d'empilement élémentaire. En outre, les propriétés de réflexion et de transmission peuvent être modulées en fonction de la longueur d'onde du faisceau incident.

Selon un exemple, l'empilement de Bragg élémentaire comprend deux couches diélectriques et/ou semi-conductrices.

Selon un exemple, l'empilement de Bragg élémentaire comprend une couche de silicium amorphe et une couche d'oxyde de silicium.

Selon un exemple, le module détecteur est disposé à une distance non nulle de la face arrière du miroir, ladite distance étant comprise entre 1 µm et 15 cm, de préférence entre 0,5 cm et 15 cm.

Selon un exemple, le dispositif comprend une couche de support mécanique présentant une face avant et une face arrière opposée à la face avant.

Selon un exemple, le miroir surmonte, par sa face arrière, la face avant de la couche de support mécanique.

Selon un exemple, la couche de support mécanique est à base de silicium, de préférence de silicium monocristallin.

Selon un exemple, le module détecteur comprend un détecteur mono-élément.

Selon un exemple, le module détecteur comprend une matrice pixélisée, de préférence pixélisée selon deux-dimensions. La détection d'un décalage en position du faisceau transmis ainsi que de la déformation du faisceau transmis est ainsi facilitée. En outre, une mesure quantitative peut être obtenue, améliorant la mesure de l'alignement du faisceau incident et/ou de la déformation du miroir. Cela facilite en outre la mise en œuvre d'une action correctrice subséquente.

Selon un exemple, le dispositif réflecteur comprend en outre un élément optique, par exemple une lentille, configuré pour focaliser le faisceau transmis sur le module détecteur. La focalisation du faisceau transmis sur le détecteur peut ainsi être modulée, et notamment en synergie avec la distance du module détecteur par rapport à la lentille. La résolution de la détection de l'état d'alignement et/ou de la déformation du miroir peut ainsi être améliorée.

Selon un exemple, le miroir s'étend dans un plan d'extension principale, sur au moins une dimension millimétrique, par exemple un diamètre, de préférence comprise entre 500 µm et 10 mm, de préférence entre 500 µm et 5 mm.

Selon un exemple, le dispositif est un dispositif réflecteur de LIDAR.

Selon un autre exemple, le dispositif est un système de pointage laser.

Selon ces deux exemples, le dispositif réflecteur comprend notamment en outre un support et un module actionneur configuré pour pivoter le miroir autour d'au moins un axe de rotation par rapport au support, le module détecteur étant solidaire du support.

Selon un exemple, le dispositif comprend la source lumineuse configurée pour émettre le faisceau incident.

Selon un exemple, la source lumineuse est une source infrarouge.

Selon un exemple, la source lumineuse est configurée pour émettre le faisceau incident avec une longueur d'onde supérieure ou égale à 900 nm, par exemple 905 nm ou 1550 nm.

Selon un exemple, la source lumineuse est une source laser.

Selon un exemple, le faisceau incident et le faisceau réfléchi se propagent selon des directions de propagation distinctes entre elles.

Selon un exemple, le faisceau transmis est un faisceau non diffracté. Selon un exemple, le faisceau transmis et le faisceau incident se propagent selon une direction de propagation sensiblement identique.

Selon un exemple, le procédé comprend la réflexion d'une partie du faisceau incident par le miroir pour former le faisceau réfléchi, en particulier vers une cible.

Selon un exemple, le procédé comprend une transmission d'une autre partie du faisceau incident par le miroir, pour former le faisceau transmis.

Selon un exemple, la réflexion du faisceau incident par le miroir pour former le faisceau réfléchi est au moins en partie simultanée à la mesure par le module détecteur, de l'au moins un paramètre associé au faisceau transmis.

Selon un exemple, le procédé comprend en outre une correction d'au moins une parmi la position de la source lumineuse et la position du miroir si, lors de la détermination d'un état d'alignement du faisceau incident avec le dispositif réflecteur et/ou d'une déformation du miroir, un mauvais alignement du faisceau incident est déterminé. La fiabilité du dispositif réflecteur peut ainsi être améliorée en corrigeant le défaut d'alignement de la source ou en compensant ce défaut d'alignement avec la position du miroir.

Selon un exemple, le dispositif réflecteur comprenant un module actionneur configuré pour pivoter le miroir autour d'au moins un axe de rotation, et le module détecteur solidaire du miroir comprenant une matrice pixélisée en deux-dimensions :
- la détermination d'un état d'alignement du faisceau incident avec le dispositif réflecteur et/ou d'une déformation du miroir comprend une détermination d'un décalage entre la position du faisceau transmis et la position définie, et
- la correction de la position du miroir comprend une modification de la plage angulaire de pivotement du miroir en fonction dudit décalage.

Le désalignement de la source peut ainsi être déterminé de façon quantitative. En fonction de cette donnée, la modification de la plage angulaire de pivotement du miroir permet de compenser ce désalignement de façon simplifiée, et sans avoir à revoir l'alignement de la source. Ceci est particulièrement avantageux pour une correction au cours de l'utilisation du dispositif réflecteur, sans nécessiter un démontage et/ou un réalignement complexe.

Selon un exemple, le procédé comprend une émission d'une alerte et/ou une action de dissipation thermique au niveau du miroir si, lors de la détermination d'un état d'alignement du faisceau incident avec le dispositif réflecteur et/ou d'une déformation du miroir, une déformation du miroir est déterminée. La fiabilité de la réflexion est ainsi améliorée soit par l'émission d'une alerte à l'utilisateur, soit par action sur une cause de la déformation en limitant l'échauffement thermique du miroir.

On entend par un substrat, une couche à base d'une espèce A, un substrat, une couche comprenant cette espèce A uniquement ou cette espèce A et éventuellement d'autres espèces.

Par dispositif microélectronique, on entend tout type de dispositif réalisé avec les moyens de la microélectronique. Ces dispositifs englobent notamment en plus des dispositifs à finalité purement électronique, des dispositifs micromécaniques ou électromécaniques (MEMS, NEMS...) ainsi que des dispositifs optiques ou optoélectroniques (MOEMS, LED...).

Il est précisé que dans le cadre de la présente invention, l'épaisseur d'une couche ou d'un substrat se mesure selon une direction perpendiculaire à la surface selon laquelle cette couche ou ce substrat présente son extension maximale. L'épaisseur est ainsi prise selon une direction perpendiculaire aux faces principales du substrat sur lequel repose les différentes couches.

Il est précisé que, dans le cadre de la présente invention, les termes « sur », « surmonte », « recouvre », « sous-jacent », en « vis-à-vis » et leurs équivalents ne signifient pas forcément « au contact de ». Ainsi par exemple, la disposition d'une première couche sur une deuxième couche, ne signifie pas obligatoirement que les deux couches sont directement au contact l'une de l'autre, mais signifie que la première couche recouvre au moins partiellement la deuxième couche en étant soit directement à son contact, soit en étant séparée d'elle par au moins une autre couche ou au moins un autre élément.

On entend par un paramètre « sensiblement égal/supérieur/inférieur à » une valeur donnée, que ce paramètre est égal/supérieur/inférieur à la valeur donnée, à plus ou moins 10 %, près de cette valeur. On entend par un paramètre « sensiblement compris entre » deux valeurs données que ce paramètre est au minimum égal à la plus petite valeur donnée, à plus ou moins 10 %, près de cette valeur, et au maximum égal à la plus grande valeur donnée, à plus ou moins 10 %, près de cette valeur.

Dans la présente demande de brevet, le terme « solidaire » utilisé pour qualifier la liaison entre deux pièces signifie que les deux pièces sont liées/fixées l'une par rapport à l'autre, selon tous les degrés de liberté, sauf s'il est explicitement spécifié différemment. Par exemple, s'il est indiqué que deux pièces sont solidaires en translation selon une direction X, cela signifie que les pièces peuvent être mobiles l'une par rapport à l'autre, possiblement selon plusieurs degrés de liberté, à l'exclusion de la liberté en translation selon la direction X. Autrement dit, si on déplace une pièce selon la direction X, l'autre pièce effectue le même déplacement.

Dans la description détaillée qui suit, il pourra être fait usage de termes tels que « horizontal », « vertical », « longitudinal », « transversal », « supérieur », « inférieur », « haut », « bas », « avant », « arrière », « intérieur », « extérieur ». Ces termes doivent être interprétés de façon relative en relation avec la position normale du dispositif réflecteur et la propagation des faisceaux lumineux, et notamment du faisceau lumineux incident, relativement au dispositif réflecteur.

On utilisera également un repère dont la direction longitudinale correspond à l'axe X, la direction transversale ou droite/gauche correspond à l'axe Y et la direction verticale ou bas/haut ou encore avant/arrière correspond à l'axe Z.

Aux fins de la présente divulgation, l'expression "A et/ou B" signifie (A), (B), ou (A et B). Aux fins de la présente divulgation, l'expression "A, B et/ou C" signifie (A), (B), (C), (A et B), (A et C), (B et C), ou (A, B et C).

Le dispositif réflecteur 1 et le procédé de mesure de l'alignement d'un faisceau incident 20 et/ou d'une déformation de miroir 10 sont maintenant décrits selon plusieurs exemples de réalisation.

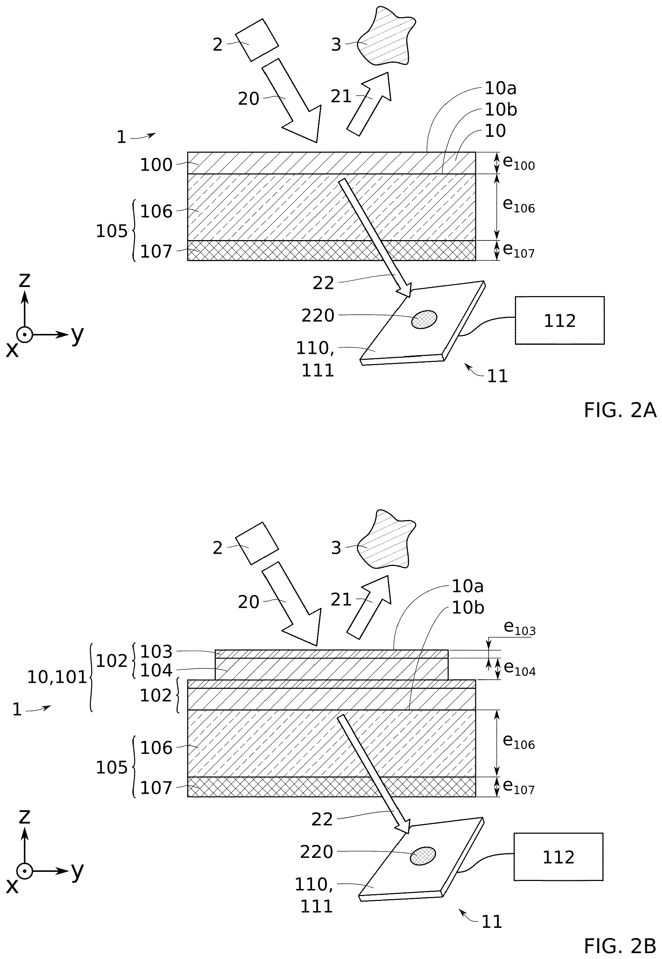

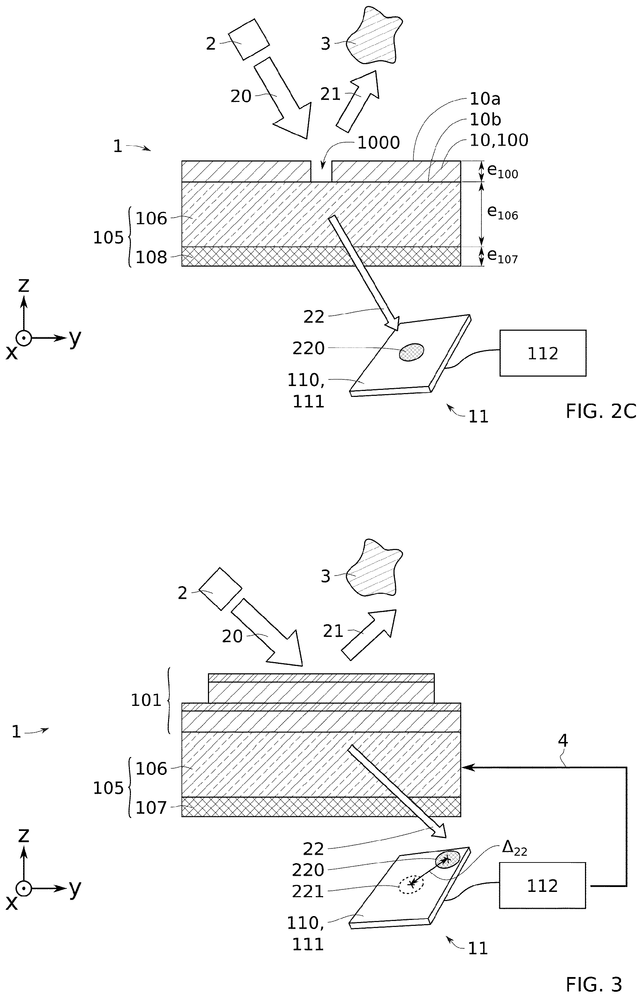

Comme l'illustrent par exemple les figures 2Aà 2C, le dispositif réflecteur 1 est destiné à réfléchir un faisceau lumineux incident 20 pour former un faisceau réfléchi 21 se propageant dans une direction déterminée, typiquement vers une cible 3. Pour cela, le faisceau lumineux incident 20 peut être émis par une source 2. La source 2 est plus particulièrement alignée avec le dispositif réflecteur 1 de sorte que, après réflexion sur le dispositif réflecteur 1, le faisceau réfléchi 21 atteigne la cible 3.

La source lumineuse 2 peut être une source infra-rouge. Selon un exemple, la source lumineuse 2 est configurée pour émettre le faisceau incident avec une longueur d'onde supérieure ou égale à 900 nm, par exemple 905 nm ou 1550 nm, en propagation dans l'air. De préférence, la source lumineuse 2 est une source laser.

Le dispositif réflecteur 1 comprend un miroir 10 présentant une face avant 10a et une face arrière 10b opposée à la face avant 10a. Le faisceau incident 20 se propage depuis la source 2 jusqu'au miroir 10, et plus particulièrement jusqu'à sa face avant 10a. Le faisceau réfléchi 21 se propage ensuite de la face avant 10a du miroir 10 jusqu'à la cible 3. Le miroir 10 est plus particulièrement un miroir plan. Notons que la taille du faisceau incident 20 sur le miroir 10 peut être plus grande, que la taille du miroir 10, ou plus petite.

Lors d'un désalignement de la source 2 et du miroir 10, on comprend que le faisceau incident 20 peut ne plus être réfléchi sur le miroir 10, ou le faisceau réfléchi 21 peut être dévié de sa course initialement prévue et manquer la cible 3. Ceci peut survenir par exemple en cas de choc. Par ailleurs, une modification de la planéité du miroir 10 peut entraîner un changement dans la focalisation du faisceau réfléchi 21. Le faisceau réfléchi 21 peut alors ne pas atteindre correctement la cible 3. Ceci peut survenir par exemple lors d'une contrainte thermique suite à une chauffe du miroir 10 ou d'un choc ou d'une sollicitation mécanique sur la structure, par exemple lors de vibration. Le faisceau incident 20 peut en effet échauffer le miroir 10, ce qui va impacter ses propriétés de réflexion. Ceci peut notamment être observé lorsque que le faisceau incident est un faisceau infra-rouge, et/ou lorsque la source 2 est une source laser.

Afin de fiabiliser la réflexion par le dispositif réflecteur 1, le miroir 10 est configuré pour réfléchir une partie du faisceau incident 20 pour former le faisceau réfléchi 21, et pour transmettre une autre partie du faisceau incident 20 par la face arrière 10b du miroir pour former un faisceau transmis 22. Le miroir 10 est donc partiellement transparent. Il présente une composante en réflexion et une composante en transmission. De préférence, le miroir 10 est configuré pour réfléchir entre 75 % et 99,9 % du faisceau incident 20. Le miroir 10 peut être configuré pour transmettre entre 24,5 % et 0,03 % du faisceau incident 20.

Le dispositif réflecteur 1 utilise le faisceau transmis 22 afin de déterminer un état d'alignement du faisceau incident 20 avec le dispositif réflecteur 1 et/ou une déformation du miroir 10. Pour cela, le dispositif réflecteur 1 comprend un module détecteur 11 disposé en regard de la face arrière 10b du miroir 10. Le module détecteur 11 est donc placé en dessous du miroir 10 dans le dispositif réflecteur 1, par rapport à la propagation du faisceau incident 20. Le module détecteur 11 est disposé de façon à recevoir le faisceau transmis 22 au moins lorsque le faisceau incident 20 est correctement aligné avec le dispositif réflecteur 1, et notamment le miroir 10.

Le module détecteur 11 est configuré pour mesurer au moins un paramètre associé au faisceau transmis 22. Ce ou ces paramètre(s) est/sont choisi(s) parmi :
- une présence ou une absence du faisceau transmis 22,
- une position 220 du faisceau transmis 22,
- une forme 222 du faisceau transmis 22.

En fonction de ce(s) paramètre(s), le module détecteur 11 peut déterminer un état d'alignement du faisceau incident 20 avec le dispositif réflecteur 1 et/ou une déformation du miroir 10. Le dispositif réflecteur 1 permet ainsi de déterminer indépendamment ces états, et ce, en continu lors de son utilisation.

Le module détecteur 11 peut comprendre un détecteur 110, 111. Le module détecteur peut comprendre en outre des moyens d'analyse 112, par exemple par au moins un processeur. Les moyens d'analyse 112 peuvent comprendre des instructions permettant d'effectuer les étapes d'analyse de données et/ou de détermination d'un état d'alignement du faisceau incident avec le dispositif réflecteur et/ou une déformation du miroir. Ces instructions peuvent permettre que l'état d'alignement du faisceau incident 20 avec le dispositif réflecteur 1 et/ou la déformation du miroir 10 soient déterminés à partir du paramètre mesuré. Ces moyens d'analyse 112 peuvent en outre comprendre des instructions pour effectuer l'analyse préalable d'une donnée acquise par un détecteur pour déterminer le paramètre associé au faisceau transmis 22.

Selon un exemple, le module détecteur 11 peut comprendre un détecteur mono-élément 110 et/ou un détecteur comprenant une matrice pixélisée 111, par exemple selon les deux dimensions X, Y. Dans les figures, notons que cette matrice pixélisée 111 est présentée de façon non limitative en perspective, notamment à des fins de lisibilité et d'explication. Par détecteur mono-élément 110, on entend que le détecteur est configuré pour mesurer l'intensité lumineuse du faisceau transmis 22 sans moyens dédiés pour connaître sa position sur le détecteur 110. Ce n'est donc pas un détecteur pixélisé. Par exemple le détecteur mono-élément est un mono-détecteur, ou encore monopixel, d'InGaAs ou de détecteur CMOS à base ou fait de silicium.

Pour un rayonnement à 1550 nm, un détecteur 110, 111 à base ou fait d'InGaAs sera privilégié. Pour un rayonnement à 905 µm, un détecteur 110, 111 à base ou fait de silicium peut être envisagé, par exemple un détecteur CMOS. Un détecteur CMOS est néanmoins généralement limité en termes de fréquence d'acquisition de l'ordre de 1 kHz à 10 kHz. Cela peut être limitant par rapport à la vitesse de pivotement du miroir 10, comme discuté plus en détail ultérieurement. Il existe des caméras scientifiques avec des fréquences d'acquisition de plusieurs dizaines de kHz, elles sont toutefois onéreuses. Le détecteur 110, 111 peut être de taille inférieure ou égale à celle du miroir 10 dans le plan (X,Y). Par exemple, le détecteur 110, 111 peut s'étendre en projection dans le plan (X,Y) sur une fraction seulement de la surface du miroir prise dans le même plan. Le détecteur 110, 111 peut s'étendre dans un plan d'extension principale sensiblement parallèle au plan d'extension principale du miroir 10. En alternative, on peut prévoir que le détecteur 110, 111 soit positionné de façon oblique par rapport au miroir 10.

Le faisceau transmis 22 se propage typiquement sensiblement dans la même direction par rapport au faisceau incident 20. De façon équivalente, le faisceau transmis 22 n'est sensiblement pas dévié par le miroir 10. De façon équivalente, on considère que la déviation du faisceau 22 lors de sa transmission par le miroir 10 est négligeable au regard des effets du désalignement de la source 2 et/ou de la déformation du miroir 10. En tout état de cause, une éventuelle déviation du faisceau transmis 22 par le miroir (par exemple en cas de défaut de parallélisme entre les deux surfaces du miroir 10 ou dans une moindre mesure en raison de l'épaisseur du miroir), peut former une limite basse de déviation du faisceau incident 20 mesurable. Comme illustré en figure 3, si le faisceau incident 20 est désaligné par rapport à sa position prévue (illustré à titre de comparaison dans les figures 2A à 2C), alors la direction de propagation du faisceau transmis 22 est modifiée en conséquence. Le désalignement du faisceau incident 20, et notamment le désalignement entre la source 2 et le miroir 10 peut être une rotation (qui modifie l'angle d'incidence du faisceau incident 20 sur le miroir 10) ou une translation (qui ne modifie pas l'angle d'incidence du faisceau incident 20 sur le miroir), ou une combinaison des deux.

Le faisceau transmis 22 peut ne plus être détecté par le module détecteur 11, ou comme illustré la position 220 du faisceau transmis sur le module détecteur peut être modifiée. Un mauvais alignement du faisceau incident 20 et donc un mauvais alignement de la source et du dispositif réflecteur 1 peuvent être déterminés.

Lorsque le module détecteur 11 comprend un détecteur mono-élément, le paramètre mesuré sera de préférence une présence ou une absence du faisceau transmis 22. Lorsque le module détecteur 11 comprend une matrice pixélisée 111, une mesure plus quantitative de la position 220 du faisceau transmis peut en outre être obtenue. Par exemple, comme illustré en figure 3, un décalage Δ₂₂ de la position 220 du faisceau transmis peut être mesuré par rapport à une position définie 221, par exemple sa position initiale.

Lorsqu'un mauvais alignement du faisceau incident 20 est détecté, une action correctrice 4 peut alors être mise en place. Le dispositif réflecteur 1, par exemple le miroir 10, et/ou la source 2 peuvent être réalignés jusqu'à obtenir à nouveau la détection d'un faisceau transmis 22 sur le module détecteur 11. De façon alternative complémentaire, le dispositif réflecteur 1, par exemple le miroir 10, et/ou la source 2 peuvent être réalignés de façon à compenser le décalage Δ₂₂ de la position 220 du faisceau transmis. Un exemple plus particulier est décrit ultérieurement en relation avec un miroir pivotable en rotation.

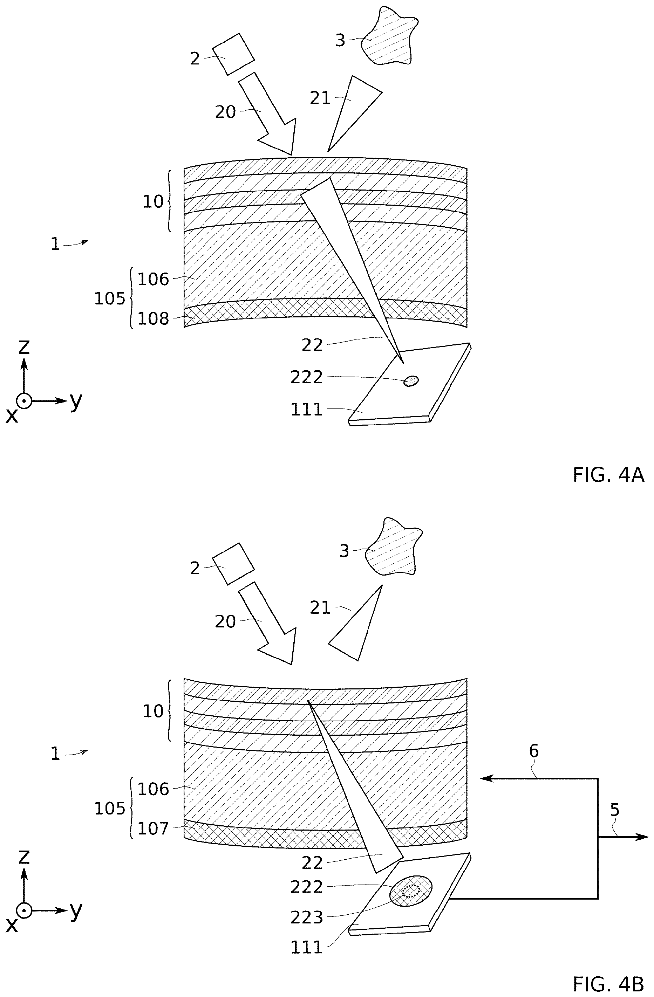

Lors d'une déformation du miroir 10, l'état de focalisation des faisceaux réfléchi 21 et transmis 22 peut être modifié. Ces faisceaux 21, 22 peuvent par exemple devenir plus convergents ou plus divergents que le faisceau incident 20, qui est généralement focalisé à l'infini. La forme 222 du faisceau transmis 22 sur le module détecteur 11 peut être modifiée, comme illustré par exemple dans les figures 4A et 4B.

Lorsque le module détecteur 11 comprend un détecteur mono-élément, une déformation du miroir 10 peut être déterminée en fonction de l'intensité lumineuse mesurée. La forme du faisceau transmis 22 sur le module détecteur 11 étant modifiée, une variation d'intensité peut en effet être mesurée. De préférence, pour déterminer une déformation du miroir 10, le module détecteur 11 comprend une matrice pixélisée 111. L'aire du spot formé par le faisceau transmis 22 sur la matrice pixélisée 111 peut être modifiée en fonction de la focalisation du faisceau transmis 22. Par exemple, comme illustré en figures 4A et 4B, une évolution de la forme 222 du faisceau transmis 22 peut être déterminée par rapport à une forme définie 223, par exemple sa forme initiale.

Lorsqu'une déformation de leur miroir 10 est détectée, une alerte 5 peut être émise, par exemple à l'utilisateur. Ainsi l'utilisateur est averti d'une fiabilité diminuée de la réflexion du faisceau incident 20 vers la cible 3. De façon alternative ou complémentaire, une action 6 de dissipation thermique peut être effectuée au niveau du miroir 10. Par exemple, la source 2 peut être éteinte afin de dissiper l'échauffement du miroir 10. L'homme du métier peut tout à fait envisager d'autres actions permettant de compenser et/ou de limiter la déformation du miroir 10.

La position définie 221 et/ou la forme définie 223 peuvent être définies lors d'une étape de calibration, par exemple avant la réflexion vers la cible visée 3.

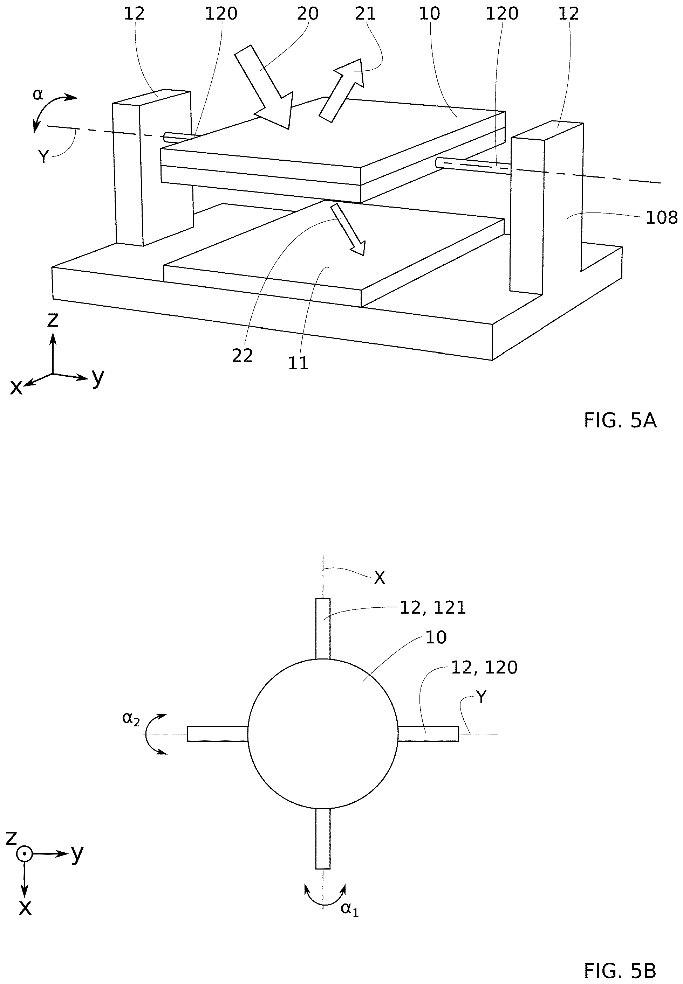

Selon un exemple particulier, illustré par les figures 5Aet 5B, le miroir 10 est configuré pour pivoter autour d'au moins un axe de rotation X, et de préférence autour des axes de rotation X et Y, par exemple sur un intervalle angulaire α, α1, α2. Les axes X, Y sont alors non parallèles entre eux, et de préférence perpendiculaires. De préférence, au moins un axe de rotation est parallèle à, et de préférence situé dans, un plan de la face avant 10a de réflexion du miroir 10. Le miroir 10 peut notamment être un micromiroir de type MEMS. Le dispositif réflecteur 1 est ainsi particulièrement adapté à des applications de LIDAR ou de pointage laser. De préférence, le miroir 10 est configuré pour pivoter autour des deux axes de rotation X et Y.

Lorsque le miroir est en mouvement angulaire (en X et/ou en Y), la position du faisceau transmis 22 ne bouge pas sensiblement sauf désalignement de la source et du miroir 10 ou modification de la forme du miroir 10.

Le miroir 10 étant pivotable, il est possible de jouer sur la position angulaire du miroir 10 pour compenser le désalignement du faisceau incident 20. Par exemple, l'intervalle angulaire de rotation peut être adapté pour compenser ce désalignement. L'intervalle angulaire de rotation α, α1 et/ou α2 peut notamment être adapté selon le décalage Δ₂₂ mesuré.

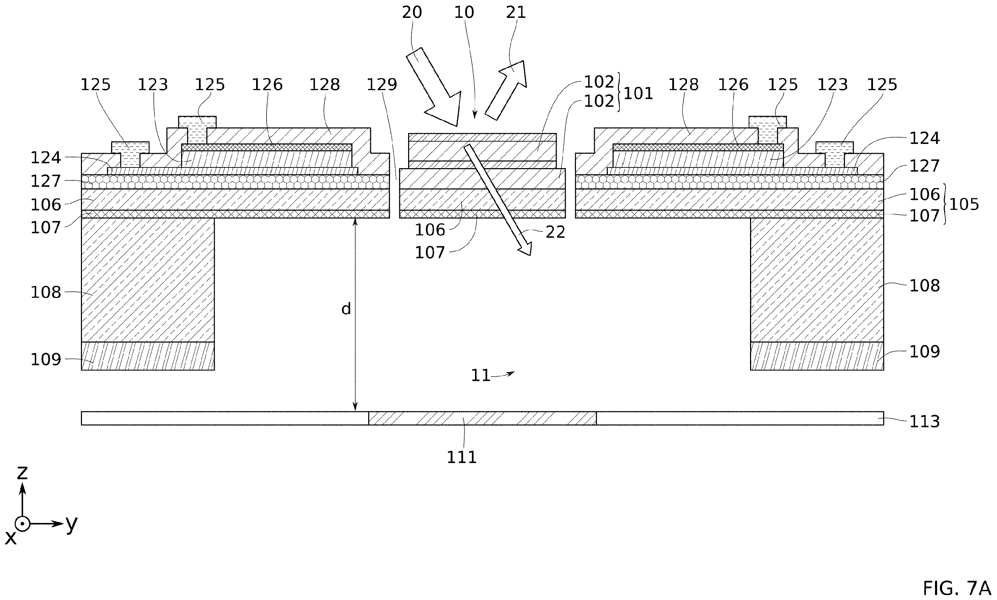

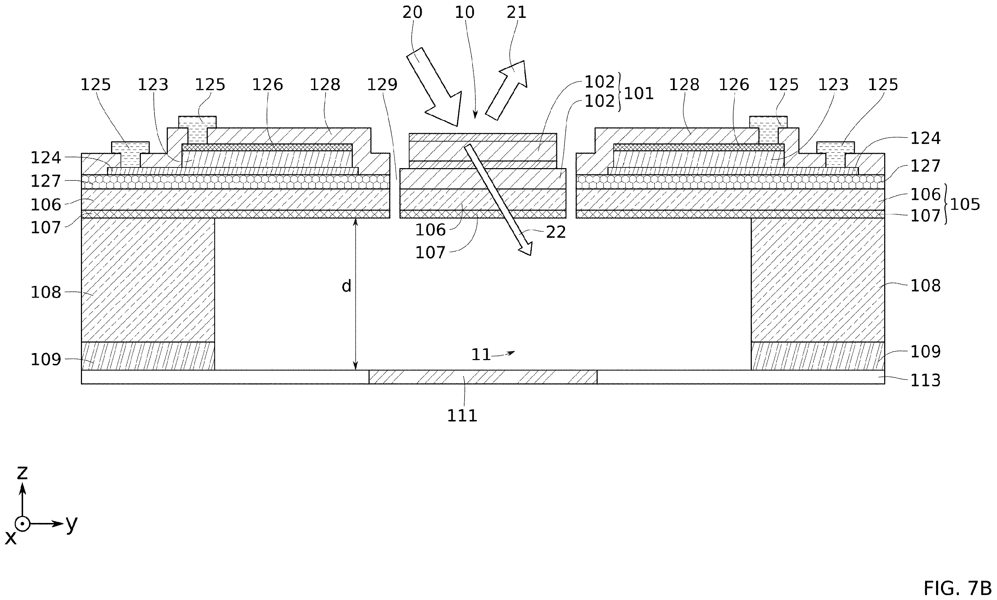

Selon un exemple, le miroir 10 peut être disposé sur un support 108 configuré pour rester fixe lors du mouvement du miroir 10. Ce support est représenté à titre d'exemple en figures 5A et 7A, 7B. Le module détecteur 11 est de préférence solidaire du support 108, de préférence au moins en rotation selon les directions X et Y. Le module détecteur 11 peut être solidaire du support 108 selon tous les degrés de liberté. On peut prévoir que le module détecteur 11 soit libre en translation par rapport au support 108, selon la direction Z. Ainsi le module détecteur 11 est indépendant du mouvement du miroir 10. La propagation du faisceau transmis 22 ne sera donc sensiblement pas impactée par la position en rotation du miroir 10.

L'état d'alignement du faisceau incident 20 et/ou la déformation du miroir 10 peuvent donc être déterminés indépendamment de la position en rotation du miroir 10. Il n'est ainsi pas nécessaire pour effectuer la mesure, de ramener le miroir 10 dans une position de consigne pour faire la mesure. La mesure de l'alignement d'un faisceau incident 20 et/ou d'une déformation du miroir 10 peut donc être faite en continu lors de l'utilisation du dispositif réflecteur 1, y compris pour un miroir 10 mobile en rotation.

Le module détecteur 11 et le support 108 peuvent être dissociés l'un de l'autre, comme par exemple illustré en figure 7A. Le module détecteur 11 et le support 108 peuvent être solidarisé l'un à l'autre par le biais d'un support 113, comme par exemple illustré en figure 7B.

Le dispositif réflecteur 1 peut en outre comprendre un module actionneur 12 configuré pour faire pivoter le miroir autour du ou des axes de rotation X, Y, par exemple par des bras actionneurs 120. Le module actionneur 12 peut comprendre au moins un actionneur choisi parmi : un actionneur électrostatique, un actionneur magnétique, un actionneur piézoélectrique, un actionneur thermique. De préférence, le module actionneur 12 comprend au moins un actionneur 120 piézoélectrique. Le module actionneur 12 présente par exemple deux actionneurs 120, un sur un axe de rotation dit « rapide » et un sur un axe de rotation dit « lent ». Le module actionneur 12 peut présenter des fréquences de mouvement de sensiblement 10 Hz sur l'axe lent et de sensiblement 1 kHz sur l'axe rapide.

De préférence, le module détecteur 11 présente une résolution temporelle supérieure ou égale à un temps caractéristique de désalignement du faisceau incident. On peut par exemple prévoir qu'une source 2, par exemple une source laser, vibre à une fréquence donnée (par exemple lié à des vibrations de la structure mal compensé). Ce mouvement peut ainsi être suivi sur le module détecteur 11. Le faisceau transmis 22 peut bouger par rapport à l'ensemble formé par le miroir 10 et le module détecteur 11. Le module détecteur 11 peut détecter ce déplacement en temps réel lorsque sa fréquence d'acquisition est supérieure ou égale au déplacement du point d'impact du faisceau transmis 22 sur le module détecteur 11.

Selon un exemple, la vitesse de pivotement du miroir 10 est typiquement comprise entre 1Hz et 50 kHz. Cette valeur peut notamment être fonction de la taille du miroir et de l'application visée. Par exemple, pour un miroir de 2 mm de diamètre, les fréquences lente et rapide seront respectivement de 10 Hz à40 Hz et de 200 Hz à1000 Hz. Pour de miroirs plus petits (par exemple autour de 0,5 mm de diamètre) les fréquences rapides peuvent aller jusqu'à 20 kHz par exemple.

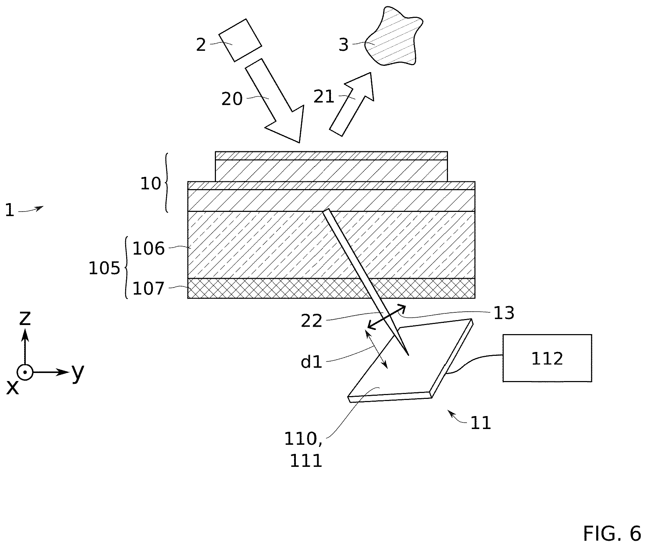

Selon un exemple illustré en figure 6, le dispositif réflecteur 1 peut comprendre un élément optique 13, par exemple une lentille 13, configuré pour moduler la focalisation du faisceau transmis 22 sur le module détecteur 11. Ainsi la résolution de la mesure de position 220 et/ou de la forme 222 du faisceau transmis 22 peut être améliorée, et ce notamment lorsque le module détecteur comprend une matrice pixélisée 111. Pour cela, la distance d₁ entre la lentille 13 et le détecteur 110, 111 peut par exemple être adaptée.

Le dispositif réflecteur 1 est maintenant décrit plus en détail élément par élément, selon plusieurs exemples de réalisation.

Le miroir 10 est partiellement transparent. Pour cela, le miroir 10 peut comprendre au moins une couche réflectrice métallique 100 configuré pour laisser passer une partie du faisceau incident 20 pour former le faisceau transmis 22. Pour cela, et comme illustré en figure 2A, la couche réflectrice métallique 100 peut présenter une épaisseur e₁₀₀ configurée pour laisser passer une partie du faisceau incident 20. On comprend que cette épaisseur peut varier selon la nature du métal utilisé. Par exemple, la couche réflectrice métallique 100 est à base d'or. Selon un exemple, la couche réflectrice métallique 100 présente une épaisseur e₁₀₀ sensiblement inférieure ou égale à 100 nm

De façon alternative complémentaire, et comme illustré en figure 2C, le miroir 10 peut comprendre une ouverture 1000 configurée pour transmettre une partie du faisceau incident 20 pour former le faisceau transmis 22. L'épaisseur e₁₀₀ de la couche réfléchissante métallique 100 peut alors être supérieure à la gamme ci-dessus. L'analyse de la déformation du miroir 10 peut toutefois être limitée dans le cas d'une simple ouverture 1000, sans composante transmise à travers le matériau réfléchissant du miroir 10.

Selon un exemple préférentiel, par exemple illustré en figures 2B, 3 à 4B, 6 et 7A et 7B, le miroir 10 comprend un empilement de Bragg 101, l'empilement de Bragg comprenant au moins un empilement de Bragg élémentaire 102. Par « empilement de Bragg », on entend une succession périodique de couches transparentes, ou partiellement transparentes, et d'indices de réfraction différents. Un empilement de Bragg élémentaire comprend un empilement de deux couches 103, 104 diélectriques et/ou semi-conductrices. Dans l'empilement de Bragg, de façon connue, la différence d'indice optique entre ces couches est utilisée pour réfléchir la longueur d'onde souhaitée.

La nature des couches 103, 104 peut être choisie en fonction de la longueur d'onde du faisceau incident 20, pour moduler la part transmise et la part réfléchie du faisceau. Le nombre d'empilements de Bragg élémentaires peut en outre être choisi pour moduler la part transmise et la part réfléchie du faisceau incident 20. Par exemple, le nombre d'empilement de Bragg élémentaires 102 peut permettre de moduler la quantité de lumière transmise pour ne pas éblouir le module détecteur 11 tout en s'assurant d'un seuil suffisant à la détection. La limitation du nombre d'empilements de Bragg élémentaires permet en outre de réduire les contraintes mécaniques imposées au miroir, et ainsi limiter le risque d'une déformation mécanique du miroir. Selon un exemple, l'empilement de Bragg 101 comprend entre un et cinq, de préférence entre un et trois, empilements de Bragg élémentaires 102.

De préférence, l'épaisseur des couches 103, 104 est choisie de sorte que ce soit des couches dite « λ/4 », c'est à dire que le produit de l'épaisseur d'une couche par l'indice optique de la couche est sensiblement égal au quart de la longueur d'onde dans le vide. Cela permet d'obtenir des interférences constructives en réflexion et donc de maximiser la réflexion du faisceau incident 20, à nombre de couches donné, le reste partant en transmission.

À titre d'exemple, lorsque le rayonnement est dans le domaine infrarouge, et plus particulièrement de longueur d'onde égale à 1550 nm, l'empilement de Bragg élémentaire 102 peut comprendre une couche 104 à base ou faite de dioxyde de silicium d'une épaisseur de sensiblement 305 nm (dont l'indice de réfraction à 1550 nm vaut 1,45) surmontée d'une couche 103 à base ou faite de silicium amorphe d'une épaisseur de 110 nm (dont l'indice de réfraction à 1550 nm vaut 3,42).

Selon cette configuration, un empilement de Bragg 101 ne comprenant qu'un seul empilement de Bragg élémentaire 102, présentera, pour une incidence de 20°, un coefficient de réflexion égal à 82,4 % et un coefficient de transmission égale à 17,6 % face à un rayonnement lumineux de longueur d'onde égale à 1550 nm. Pour une incidence de 45°, le coefficient de réflexion est de 80,9 % et le coefficient de transmission est de 19,1 %. Cet empilement ne sera par ailleurs pas absorbant et présentera un échauffement quasi nul. Le risque d'un échauffement du miroir 10 est donc limité.

Toujours selon cette configuration, un empilement de Bragg 101 comprenant deux empilements de Bragg élémentaires 102 présentera, pour une incidence du rayonnement de 45° un coefficient de réflexion égal à 96,4 % et un coefficient de transmission égal à 3,6 % face à un rayonnement lumineux de longueur d'onde égale à 1550 nm. Cet empilement ne sera par ailleurs que peu ou pas absorbant et présentera un échauffement quasi nul.

Selon un exemple, le miroir 10 s'étend dans un plan d'extension principale (X, Y), sur au moins une dimension millimétrique, par exemple un diamètre, de préférence comprise entre 500 µm et 10 mm, de préférence entre 500 µm et 5 mm.

Selon un exemple, le miroir 10 peut être formé sur une couche de support mécanique 105 à base ou faite par exemple d'un matériau semi-conducteur ou diélectrique.

La distance entre le module détecteur 11 et le miroir 10 peut être modifiée pour optimiser la mesure. Comme illustré par exemple en figures 7A et 7B, le module détecteur 11, et notamment le détecteur 110, 111 peut être disposé à une distance d non nulle de la face arrière 10b du miroir 10. Cette distance d peut être comprise entre 1 µm et 15 cm, de préférence entre 0,5 cm et 15 cm. Selon un exemple, le module détecteur 11 est disposé à distance de la face arrière de la couche de support mécanique 105. Selon un exemple alternatif, le module détecteur11 est disposé sur la face arrière de la couche de support mécanique 105.

Le choix du matériau de la couche de support mécanique 105 peut, par exemple, être fonction de la longueur d'onde λ. À titre d'exemple, le coefficient d'absorption d'une couche de support mécanique 105 est négligeable, voire nul, pour des longueurs d'onde supérieures à 1250 nm. La couche de support mécanique 105 peut comprendre une ou plusieurs couches 106, 107. Comme par exemple illustré dans les figures 2A à 2C, la couche de support mécanique 105 peut comprendre une couche 106 à base ou faite de silicium, par exemple de silicium monocristallin, par exemple d'une épaisseur e₁₀₆ sensiblement comprise entre 1µm et 100 µm, et de préférence égale à 20 µm. La couche de support mécanique 105 peut en outre comprendre une couche 107 a base ou faite d'oxyde de silicium par exemple issue d'une couche d'oxyde enterrée. La couche 107, par exemple de l'oxyde de silicium, peut présenter une épaisseur sensiblement comprise entre 0,2 µm et 2 µm.

Un exemple d'architecture du dispositif réflecteur 1 est maintenant décrit en référence aux figures 7A et 7B. La couche de support mécanique 105 peut être issue d'un substrat de semi-conducteur sur isolant, et plus particulièrement de silicium sur isolant. Ce substrat peut comprendre par exemple une couche de silicium monocristallin 106 en recouvrement d'une couche de dioxyde de silicium 107 formée sur un substrat de silicium monocristallin 108.

L'empilement de Bragg 101 peut surmonter la couche de support mécanique 105. L'empilement de Bragg représenté sur cette figure comprend notamment deux empilements de Bragg élémentaires 102 comprenant chacun une couche de dioxyde de silicium de 305 nm d'épaisseur, et de silicium amorphe de 110 nm d'épaisseur.

Le dispositif réflecteur comprend en outre une première couche de protection 127, par exemple à base ou faite d'oxyde de silicium, d'une électrode inférieure 124, d'une couche de piézoélectrique 123 (par exemple un PZT), d'une électrode supérieure 126, et d'une deuxième couche de protection 128, par exemple à base ou faite d'oxyde de silicium. Le dispositif réflecteur 1 peut en outre comprendre des reprises de contact 125, par exemple à base ou faites d'or.

Le dispositif réflecteur 1 peut en outre comprendre un masque 109, par exemple un masque dur. Ce masque 109, qui peut notamment être à base ou fait de dioxyde de silicium, peut être issu de la fabrication du dispositif réflecteur pour permettre la libération du miroir 10 par gravure à partir d'une face arrière du substrat SOI.

Le miroir 109 peut être partiellement entouré par des tranchées, traversant la couche de support mécanique 105. On comprend donc que la couche de support mécanique 105 du miroir 10 peut être issue du même substrat que le support 108. On considère que la couche de support mécanique 105 du miroir 10 peut ne pas être solidaire en rotation du support 108, notamment du fait de la libération du miroir 10 et des tranchées 129.

Un exemple du procédé de fabrication du dispositif réflecteur est par exemple donné dans le document EP3726268A1. Le module détecteur 11 peut être positionné en regard de la face arrière 10b du miroir 10 par des procédés de packaging connus de l'homme du métier.

L'invention n'est pas limitée aux modes de réalisations précédemment décrits et s'étend à tous les modes de réalisation couverts par l'invention. La présente invention ne se limite pas aux exemples précédemment décrits. Bien d'autres variantes de réalisation sont possibles, par exemple par combinaison de caractéristiques précédemment décrites, sans sortir du cadre de l'invention. Par exemple, les exemples illustrés mettant en œuvre un empilement de Bragg sont transposables à un miroir présentant une couche métallique partiellement réfléchissante. Une architecture particulière de dispositif réflecteur 11 est donnée en exemple. Le dispositif réflecteur peut être mis en œuvre sur tout autre type de dispositif réflecteur présentant un miroir partiellement transparent. En outre, les caractéristiques décrites relativement à un aspect de l'invention peuvent être combinées à un autre aspect de l'invention.

## Revendications

1. Dispositif réflecteur (1) destiné à réfléchir un faisceau lumineux incident (20) vers une cible (3), le dispositif réflecteur (1) comprenant un miroir (10) partiellement transparent présentant une face avant (10a) disposée de façon à recevoir le faisceau lumineux incident (20) et une face arrière (10b) opposée à la face avant (10a), le miroir (10) étant configuré pour former un faisceau réfléchi (21) par réflexion d'une partie du faisceau incident (20), et pour transmettre une autre partie du faisceau incident (20) par la face arrière (10b) pour former un faisceau transmis (22),
le dispositif réflecteur (1) étant **caractérisé en ce qu'**il comprend en outre un module détecteur (11) disposé en regard de la face arrière (10b) du miroir (10) de façon à recevoir le faisceau transmis (22) au moins lorsque le faisceau lumineux incident (20) est correctement aligné avec le dispositif réflecteur (1), le module détecteur (11) étant configuré pour mesurer au moins un paramètre associé au faisceau transmis (22), l'au moins un paramètre étant choisi parmi :
• une présence ou une absence du faisceau transmis (22),
• une position (220) du faisceau transmis (22),
• une forme (222) du faisceau transmis (22),
et pour déterminer un état d'alignement du faisceau incident (20) avec le dispositif réflecteur (1) et/ou une déformation du miroir (10).

2. Dispositif réflecteur (1) selon la revendication précédente, dans lequel le module détecteur (11) est configuré pour déterminer l'état d'alignement du faisceau incident (20) avec le dispositif réflecteur (1) et/ou d'une déformation du miroir (10) selon :
- si le paramètre mesuré par le module détecteur (11) est une absence du faisceau transmis (22) et/ou une position (220) du faisceau transmis (22) différente d'une position définie (221), un mauvais alignement du faisceau incident (20) est déterminé par le module détecteur (11), et/ou
- si le paramètre mesuré par le module détecteur (11) est une forme (222) du faisceau transmis (22) différente d'une forme définie (223), une déformation du miroir (10) est déterminée par le module détecteur (11).

3. Dispositif réflecteur (1) selon l'une quelconque des revendications précédentes, comprenant en outre un support (108) et un module actionneur (12) configuré pour pivoter le miroir (10) autour d'au moins un axe de rotation (X, Y) par rapport au support (108), et dans lequel le module détecteur (11) est solidaire du support (108).

4. Dispositif réflecteur (1) selon la revendication précédente, dans lequel le module détecteur (11) présente une résolution temporelle supérieure ou égale à un temps caractéristique de désalignement du faisceau incident (20), par exemple le module détecteur (11) présente une fréquence d'acquisition supérieure ou égale à une fréquence de vibration d'une source émettant le faisceau incident (20).

5. Dispositif réflecteur (1) selon l'une quelconque des revendications précédentes, dans lequel le miroir (10) comprend :
• une couche réflectrice métallique (100) comprenant au moins une ouverture (1000) et/ou présentant une épaisseur (e₁₀₀) choisie pour transmettre l'autre partie du faisceau incident (20) pour former le faisceau transmis (22), ou
• un empilement de Bragg (101) comprenant au moins un empilement de Bragg dit « élémentaire » (102) comprenant deux couches (103, 104) présentant des indices de réfraction distincts.

6. Dispositif réflecteur (1) selon l'une quelconque des revendications précédentes, dans lequel le module détecteur (11) est disposé à une distance (d) non nulle de la face arrière (10b) du miroir (10), ladite distance (d) étant comprise entre 1 µm et 15 cm, de préférence entre 0,5 cm et 15 cm.

7. Dispositif réflecteur (1) selon l'une quelconque des revendications précédentes, dans lequel le module détecteur (11) comprend un détecteur mono-élément (110).

8. Dispositif réflecteur (1) selon l'une quelconque des revendications 1 à 6, dans lequel le module détecteur (11) comprend une matrice pixélisée (111) selon deux-dimensions.

9. Dispositif réflecteur (1) selon l'une quelconque des revendications précédentes, comprenant en outre un élément optique (13), par exemple une lentille (13), configuré pour focaliser le faisceau transmis (22) sur le module détecteur (11).

10. Dispositif réflecteur (1) selon l'une quelconque des revendications précédentes, comprenant en outre un support (108) et un module actionneur (12) configuré pour pivoter le miroir (10) autour d'au moins un axe de rotation (X, Y) par rapport au support (108), le module détecteur (11) étant solidaire du support (108), le dispositif étant un dispositif réflecteur de LIDAR.

11. Dispositif réflecteur (1) selon l'une quelconque des revendications 1 à 9, comprenant en outre un support (108) et un module actionneur (12) configuré pour pivoter le miroir (10) autour d'au moins un axe de rotation (X, Y) par rapport au support (108), le module détecteur (11) étant solidaire du support (108), le dispositif étant un système de pointage laser.

12. Procédé de mesure de l'alignement d'un faisceau incident (20) et/ou d'une déformation de miroir (10) mettant en œuvre le dispositif réflecteur (1) selon l'une quelconque des revendications précédentes, comprenant :
• une émission du faisceau incident (20) depuis une source lumineuse (2) vers le dispositif réflecteur (1),
• une mesure, par le module détecteur (11), de l'au moins un paramètre associé au faisceau transmis (22) par le miroir (10), l'au moins un paramètre étant choisi parmi :
- une présence ou une absence du faisceau transmis (22),
- une position (220) du faisceau transmis (22),
- une forme (222) du faisceau transmis (22),
• une détermination de l'état d'alignement du faisceau incident (20) avec le dispositif réflecteur (1) et/ou de la déformation du miroir (10) comprenant :
- si le paramètre mesuré par le module détecteur (11) est une absence du faisceau transmis (22) et/ou une position (220) du faisceau transmis (22) différente d'une position définie (221), une détermination d'un mauvais alignement du faisceau incident (20), et/ou
- si le paramètre mesuré par le module détecteur (11) est une forme (222) du faisceau transmis (22) différente d'une forme définie (223), une détermination d'une déformation du miroir (10).

13. Procédé selon la revendication précédente, comprenant en outre une correction (4) d'au moins une parmi la position de la source lumineuse (2) et la position du miroir (10) si, lors de la détermination d'un état d'alignement du faisceau incident (20) avec le dispositif réflecteur (1) et/ou d'une déformation du miroir (10), un mauvais alignement du faisceau incident (20) est déterminé.

14. Procédé selon la revendication précédente, dans lequel, le dispositif réflecteur (1) comprenant un module actionneur (12) configuré pour pivoter le miroir (10) autour d'au moins un axe de rotation (X, Y), et le module détecteur (11) solidaire du miroir (10) comprenant une matrice pixélisée en deux-dimensions :
• la détermination d'un état d'alignement du faisceau incident (20) avec le dispositif réflecteur (1) et/ou d'une déformation du miroir (10) comprend une détermination d'un décalage (Δ₂₂) entre la position (220) du faisceau transmis (22) et la position définie (221), et
• la correction (4) de la position du miroir (10) comprend une modification de la plage angulaire (α) de pivotement du miroir (10) en fonction dudit décalage (Δ₂₂).

15. Procédé selon l'une quelconque des trois revendications précédentes, comprenant une émission (5) d'une alerte et/ou une action (6) de dissipation thermique au niveau du miroir (10) si, lors de la détermination d'un état d'alignement du faisceau incident (20) avec le dispositif réflecteur (1) et/ou d'une déformation du miroir (10), une déformation du miroir (10) est déterminée.

## Patentansprüche

1. Reflektorvorrichtung (1), die dazu bestimmt ist, einen Lichtstrahl (20), der zu einem Ziel (3) einfällt, zu reflektieren, wobei die Reflektorvorrichtung (1) einen Spiegel (10) umfasst, der teilweise transparent ist, der eine vordere Fläche (10a) aufweist, die derart angeordnet ist, dass sie den einfallenden Lichtstrahl (20) empfängt, und eine hintere Fläche (10b), die der vorderen Fläche (10a) entgegengesetzt ist, wobei der Spiegel (10) dazu konfiguriert ist, einen reflektierten Strahl (21) durch Reflexion eines Teils des einfallenden Strahls (20) zu bilden, und um einen anderen Teil des einfallenden Strahls (20) durch die hintere Fläche (10b) zu übertragen, um einen übertragenen Strahl (22) zu bilden, wobei die Reflektorvorrichtung (1) **dadurch gekennzeichnet ist, dass** sie außerdem ein Detektormodul (11) umfasst, das gegenüber der hinteren Fläche (10b) des Spiegels (10) derart angeordnet ist, dass sie den übertragenen Strahl (22) mindestens empfängt, wenn der einfallende Lichtstrahl (20) korrekt mit der Reflektorvorrichtung (1) gefluchtet ist, wobei das Detektormodul (11) dazu konfiguriert ist, mindestens einen Parameter zu messen, der dem übertragenen Strahl (22) zugeordnet ist, wobei der mindestens eine Parameter ausgewählt ist aus:
• einer Anwesenheit oder einer Abwesenheit des übertragenen Strahls (22),
• einer Position (220) des übertragenen Strahls (22),
• einer Form (222) des übertragenen Strahls (22),
und um einen Fluchtungszustand des einfallenden Strahls (20) mit der Reflektorvorrichtung (1) und/oder eine Verformung des Spiegels (10) zu bestimmen.

2. Reflektorvorrichtung (1) nach dem vorstehenden Anspruch, wobei das Detektormodul (11) dazu konfiguriert ist, den Fluchtungszustand des einfallenden Strahls (20) mit der Reflektorvorrichtung (1) und/oder eine Verformung des Spiegels (10) zu bestimmen gemäß:
- wenn der von dem Detektormodul (11) gemessene Parameter eine Abwesenheit des übertragenen Strahls (22) und/oder eine Position (220) des übertragenen Strahls (22) ist, die sich von einer definierten Position (221) unterscheidet, Bestimmen einer schlechten Fluchtung des einfallenden Strahls (20) durch das Detektormodul (11), und/oder
- wenn der von dem Detektormodul (11) gemessene Parameter eine Form (222) des übertragenen Strahls (22) ist, die sich von einer definierten Form (223) unterscheidet, Bestimmen einer Verformung des Spiegels (10) durch das Detektormodul (11).

3. Reflektorvorrichtung (1) nach einem der vorstehenden Ansprüche, die außerdem einen Träger (108) und ein Betätigungsmodul (12) umfasst, das dazu konfiguriert ist, den Spiegel (10) um mindestens eine Rotationsachse (X, Y) in Bezug auf den Träger (108) zu drehen, und wobei das Detektormodul (11) fest mit dem Träger (108) verbunden ist.

4. Reflektorvorrichtung (1) nach dem vorstehenden Anspruch, wobei das Detektormodul (11) eine zeitliche Auflösung aufweist, die größer oder gleich einer charakteristischen Zeit für die Fluchtungsabweichung des einfallenden Strahls (20) ist, wobei beispielsweise das Detektormodul (11) eine Erfassungsfrequenz größer oder gleich einer Schwingungsfrequenz einer Quelle aufweist, die den einfallenden Strahl (20) emittiert.

5. Reflektorvorrichtung (1) nach einem der vorstehenden Ansprüche, wobei der Spiegel (10) Folgendes umfasst:
• eine metallische reflektierende Schicht (100), die mindestens eine Öffnung (1000) umfasst und/oder eine Dicke (e100) aufweist, die dazu ausgewählt ist, den anderen Teil des einfallenden Strahls (20) zu übertragen, um den übertragenen Strahl (22) zu bilden, oder
• eine Bragg-Stapelung (101), die mindestens eine sogenannte "elementare" Bragg-Stapel (102) umfasst, die zwei Schichten (103, 104) umfasst, die unterschiedliche Brechungsindizes aufweisen.

6. Reflektorvorrichtung (1) nach einem der vorstehenden Ansprüche, wobei das Detektormodul (11) in einem Abstand (d) nicht gleich null von der hinteren Fläche (10b) des Spiegels (10) angeordnet ist, wobei der Abstand (d) zwischen 1 µm und 15 cm, bevorzugt zwischen 0,5 cm und 15 cm liegt.

7. Reflektorvorrichtung (1) nach einem der vorstehenden Ansprüche, wobei das Detektormodul (11) einen Einzelelementdetektor (110) umfasst.

8. Reflektorvorrichtung (1) nach einem der Ansprüche 1 bis 6, wobei das Detektormodul (11) eine zweidimensionale pixelierte Matrix (111) umfasst.

9. Reflektorvorrichtung (1) nach einem der vorstehenden Ansprüche, die außerdem ein optisches Element (13), beispielsweise eine Linse (13) umfasst, die dazu konfiguriert ist, den übertragenen Strahl (22) auf das Detektormodul (11) zu fokussieren.

10. Reflektorvorrichtung (1) nach einem der vorstehenden Ansprüche, die außerdem einen Träger (108) und ein Betätigungsmodul (12) umfasst, das dazu konfiguriert ist, den Spiegel (10) um mindestens eine Rotationsachse (X, Y) in Bezug auf den Träger (108) zu drehen, wobei das Detektormodul (11) fest mit dem Träger (108) verbunden ist, wobei die Vorrichtung eine LiDAR-Reflektorvorrichtung ist.

11. Reflektorvorrichtung (1) nach einem der Ansprüche 1 bis 9, die außerdem einen Träger (108) und ein Betätigungsmodul (12) umfasst, das dazu konfiguriert ist, den Spiegel (10) um mindestens eine Rotationsachse (X, Y) in Bezug auf den Träger (108) zu drehen, und wobei das Detektormodul (11) fest mit dem Träger (108) verbunden ist, wobei die Vorrichtung ein aserpointing-System ist.

12. Messverfahren für die Fluchtung eines einfallenden Strahls (20) und/oder einer Spiegelverformung (10), das die Reflektorvorrichtung (1) nach einem der vorstehenden Ansprüche einsetzt, das Folgendes umfasst:
• eine Emission des einfallenden Strahls (20) von einer Lichtquelle (2) zu der Reflektorvorrichtung (1),
• eine Messung, durch das Detektormodul (11), des mindestens einen Parameters, der dem von dem Spiegel (10) übertragenen Strahl (22) zugeordnet ist, wobei der mindestens eine Parameter ausgewählt wird aus:
- einer Anwesenheit oder einer Abwesenheit des übertragenen Strahls (22),
- einer Position (220) des übertragenen Strahls (22)
- einer Form (222) des übertragenen Strahls (22),
• einer Bestimmung des Fluchtungszustands des einfallenden Strahls (20) mit der Reflektorvorrichtung (1) und/oder der Verformung des Spiegels (10), die Folgendes umfasst:
- eine Bestimmung einer schlechten Fluchtung des einfallenden Strahls (20), wenn der von dem Detektormodul (11) gemessene Parameter eine Abwesenheit des übertragenen Strahls (22) und/oder eine Position (220) des übertragenen Strahls (22) ist, die sich von einer definierten Position (221) unterscheidet, und/oder
- eine Bestimmung einer Verformung des Spiegels (10), wenn der von dem Detektormodul (11) gemessene Parameter eine Form (222) des übertragenen Strahls (22) ist, die sich von einer definierten Form (223) unterscheidet.

13. Verfahren nach dem vorstehenden Anspruch, das außerdem eine Korrektur (4) mindestens einer der Position der Lichtquelle (2) und der Position des Spiegels (10) umfasst, wenn beim Bestimmen eines Fluchtungszustands des einfallenden Strahls (20) mit der Reflektorvorrichtung (1) und/oder einer Verformung des Spiegels (10) eine schlechte Fluchtung des einfallenden Strahls (20) bestimmt wird.

14. Verfahren nach dem vorstehenden Anspruch, wobei die Reflektorvorrichtung (1) ein Betätigungsmodul (12) umfasst, das dazu konfiguriert ist, den Spiegel (10) um mindestens eine Rotationsachse (X, Y) zu drehen, und das fest mit dem Spiegel (10) verbundene Detektormodul (11) eine zweidimensionale pixelierte Matrix umfasst:
• wobei die Bestimmung eines Fluchtungszustands des einfallenden Strahls (20) mit der Reflektorvorrichtung (1) und/oder einer Verformung des Spiegels (10) eine Bestimmung eines Versatzes (Δ22) zwischen der Position (220) des übertragenen Strahls (22) und der definierten Position (221) umfasst, und
• die Korrektur (4) der Position des Spiegels (10) eine Änderung des Drehwinkelbereichs (α) des Spiegels (10) in Abhängigkeit von dem Versatz (Δ22) umfasst.

15. Verfahren nach einem der drei vorstehenden Ansprüche, das eine Emission (5) einer Warnung und/oder eine Aktion (6) zur Wärmeableitung im Bereich des Spiegels (10) umfasst, wenn beim Bestimmen eines Fluchtungszustands des einfallenden Strahls (20) mit der Reflektorvorrichtung (1) und/oder einer Verformung des Spiegels (10) eine Verformung des Spiegels (10) bestimmt wird.

## Claims

1. Reflective device (1) intended to reflect an incident light beam (20) to a target (3), the reflective device (1) comprising a partially transparent mirror (10) having a front face (10a) disposed so as to receive the incident light beam (20) and a rear face (10b) opposite the front face (10a), the mirror (10) being configured to form a reflected beam (21) by reflection of a part of the incident beam (20), and to transmit another part of the incident beam (20) by the rear face (10b) to form a transmitted beam (22),
the reflective device (1) being **characterised in that** it further comprises a detector module (11) disposed facing the rear face (10b) of the mirror (10) so as to receive the transmitted beam (22) at least when the incident light beam (20) is correctly aligned with the reflective device (1), the detector module (11) being configured to measure at least one parameter associated with the transmitted beam (22), the at least one parameter being chosen from among:
• a presence or an absence of the transmitted beam (22),
• a position (220) of the transmitted beam (22),
• a shape (222) of the transmitted beam (22),
and to determine an alignment state of the incident beam (20) with the reflective device (1) and/or a deformation of the mirror (10).

2. Reflective device (1) according to the preceding claim, wherein the detector module (11) is configured to determine the alignment state of the incident beam (20) with the reflective device (1) and/or a deformation of the mirror (10) according to:
- if the parameter measured by the detector module (11) is an absence of the transmitted beam (22) and/or a position (220) of the transmitted beam (22) different from a defined position (221), an incorrect alignment of the incident beam (20) is determined by the detector module (11), and/or
- if the parameter measured by the detector module (11) is a shape (222) of the transmitted beam (22) different from a defined shape (223), a deformation of the mirror (10) is determined by the detector module (11).

3. Reflective device (1) according to any one of the preceding claims, further comprising a support (108) and an actuator module (12) configured to pivot the mirror (10) about at least one axis of rotation (X, Y) with respect to the support (108), and in which the detector module (11) is secured to the support (108).

4. Reflective device (1) according to the preceding claim, wherein the detector module (11) has a time resolution greater than or equal to a characteristic time of misalignment of the incident beam (20), for example, the detector module (11) has an acquisition frequency greater than or equal to a vibration frequency of a source emitting the incident beam (20).

5. Reflective device (1) according to any one of the preceding claims, wherein the mirror (10) comprises:
• a metal reflective layer (100) comprising at least one opening (1000) and/or having a thickness (e₁₀₀) chosen to transmit the other part of the incident beam (20) to form the transmitted beam (22), or
• a Bragg stack (101) comprising at least one so-called "elementary" Bragg stack (102) comprising two layers (103, 104) having distinct refraction indices.

6. Reflective device (1) according to any one of the preceding claims, wherein the detector module (11) is disposed at a non-zero distance (d) from the rear face (10b) of the mirror (10), said distance (d) being between 1µm and 15cm, preferably between 0.5cm and 15cm.

7. Reflective device (1) according to any one of the preceding claims, wherein the detector module (11) comprises a single-element detector (110).

8. Reflective device (1) according to any one of claims 1 to 6, wherein the detector module (11) comprises a pixelated array (111) along two dimensions.

9. Reflective device (1) according to any one of the preceding claims, further comprising an optical element (13), for example, a lens (13), configured to focalise the transmitted beam (22) on the detector module (11).

10. Reflective device (1) according to any one of the preceding claims, further comprising a support (108) and an actuator module (12) configured to pivot the mirror (10) about at least one axis of rotation (X, Y) with respect to the support (108), the detector module (11) being secured to the support (108), the device being a LIDAR reflective device.

11. Reflective device (1) according to any one of claims 1 to 9, further comprising a support (108) and an actuator module (12) configured to pivot the mirror (10) about at least one axis of rotation (X, Y) with respect to the support (108), the detector module (11) being secured to the support (108), the device being a laser pointing system.

12. Method for measuring the alignment of an incident beam (20) and/or a mirror (10) deformation implementing the reflective device (1) according to any one of the preceding claims, comprising:
• an emission of the incident beam (20) from a light source (2) to the reflective device (1),
• a measurement, by the detector module (11), of the at least one parameter associated with the transmitted beam (22) by the mirror (10), the at least one parameter being chosen from among:
- a presence or an absence of the transmitted beam (22),
- a position (220) of the transmitted beam (22),
- a shape (222) of the transmitted beam (22),
• a determination of the alignment state of the incident beam (20) with the reflective device (1) and/or the deformation of the mirror (10) comprising:
- if the parameter measured by the detector module (11) is an absence of the transmitted beam (22) and/or a position (220) of the transmitted beam (22) different from a defined position (221), a determination of an incorrect alignment of the incident beam (20), and/or
- if the parameter measured by the detector module (11) is a shape (222) of the transmitted beam (22) different from a defined shape (223), a determination of a deformation of the mirror (10).

13. Method according to the preceding claim, further comprising a correction (4) of at least one from among the position of the light source (2) and the position of the mirror (10) if, during the determination of an alignment state of the incident beam (20) with the reflective device (1) and/or a deformation of the mirror (10), an incorrect alignment of the incident beam (20) is determined.

14. Method according to the preceding claim, wherein, the reflective device (1) comprising an actuator module (12) configured to pivot the mirror (10) about at least one axis of rotation (X, Y), and the detector module (11) secured to the mirror (10) comprising a two-dimensional pixelated array:
• the determination of an alignment state of the incident beam (20) with the reflective device (1) and/or a deformation of the mirror (10) comprises a determination of an offset (Δ₂₂) between the position (220) of the transmitted beam (22) and the defined position (221), and
• the correction (4) of the position of the mirror (10) comprises a modification of the angular pivoting range (α) of the mirror (10) according to said offsetting (Δ₂₂).

15. Method according to any one of the three preceding claims, comprising an emission (5) of an alert and/or a thermal dissipation action (6) at the mirror (10) if, during the determination of an alignment state of the incident beam (20) with the reflective device (1) and/or a deformation of the mirror (10), a deformation of the mirror (10) is determined.
